# EUROPEAN PATENT SPECIFICATION

(11) **EP 3 696 507 B1**
(45) Date of publication and mention of the grant of the patent: **20.04.2022**
(21) Application number: 19156681.9
(22) Date of filing: 12.02.2019
(51) Int. Cl.: G01C 21/32, G05D 1/02, G01C 21/30, G06T 17/10, G06K 9/00

(54) **REPRESENTING AN ENVIRONMENT BY CYLINDRICAL AND PLANAR STRUCTURES**
UMGEBUNGSDARSTELLUNG DURCH ZYLINDRISCHE UND PLANARE STRUKTUREN
REPRÉSENTATION D'ENVIRONNEMENT PAR DES STRUCTURES CYLINDRIQUES ET PLANES

(43) Date of publication of application: 19.08.2020
(73) Proprietor: Veoneer Sweden AB, 447 83 Vårgårda (SE)
(72) Inventor: BRUNNEGARD, Oliver, 447 33 Vårgårda (SE); ERIKSSON, Olof, 125 34 Älvsjö (SE); ADERUM, Tobias, 414 70 Göteborg (SE)
(74) Representative: Westpatent AB

(56) References cited:
- US-A1- 2010 063 954
- US-A1- 2015 233 720
- SCHLICHTING ALEXANDER ET AL: "Localization using automotive laser scanners and local pattern matching", 2014 IEEE INTELLIGENT VEHICLES SYMPOSIUM PROCEEDINGS, IEEE, 8 June 2014 (2014-06-08), pages 414-419, XP032620319, DOI: 10.1109/IVS.2014.6856460 [retrieved on 2014-07-15]
- SHI PU ET AL: "Recognizing basic structures from mobile laser scanning data for road inventory studies", ISPRS JOURNAL OF PHOTOGRAMMETRY AND REMOTE SENSING, vol. 66, no. 6, 2 October 2011 (2011-10-02), pages S28-S39, XP028346806, ISSN: 0924-2716, DOI: 10.1016/J.ISPRSJPRS.2011.08.006 [retrieved on 2011-09-16]

## Description

The present disclosure relates to an environment representation that for example can be used for autonomous vehicle navigation.

Many vehicle environment detection systems comprise one or more sensors such as for example radar sensor, Lidar (Light detection and ranging) sensors, camera devices and ultrasonic sensors. These are used for collecting data used for safety arrangements as well as for driver assistance systems and autonomous vehicles.

Autonomous vehicles may need to take into account a variety of factors and make appropriate decisions based on those factors to safely and accurately reach an intended destination. For example, an autonomous vehicle may need to process and interpret visual information as well as other sensor information.

At the same time, in order to navigate to a destination, an autonomous vehicle may also need to identify its location within a particular roadway, avoid obstacles and pedestrians. This results in vast volumes of information that have to be handled.

Furthermore, if an autonomous vehicle relies on traditional mapping technology to navigate, map data representing the surrounding environment has to be downloaded depending on the area to navigate.

State of the art maps are large in data size as they store a significant portion of the observed spatial features which contributes with a large volume of data. Furthermore, traditional maps cannot be used for lane level navigation.

US 2017/0010617 describes a sparse map representation using a small amount of data to characterize individual landmarks.

US 2015/233720 relates to a system and methods for autonomous navigation using geographic feature-based localization, which includes identifying geographic features based on information received from sensors disposed on a vehicle and associating one of a horizontal space and a vertical space with geographic features. The method in US2015/233720 further includes comparing geographic features to a geographic feature map and generating a localized vehicle position based on the comparison.

US 2010/063954 provides a method for controlling a vehicle, where a dynamic condition is identified and the vehicle is controlled using a knowledge base comprising a fixed knowledge base and a learned knowledge base. The knowledge base in US2010/063954 contains information about the operating environment, such as, for example, a fixed map showing streets, structures, tree locations, and other static object locations. The information in the knowledge base may be used to perform classification and plan actions.

A. Schlichting and C. Brenner, "Localization using automotive laser scanners and local pattern matching," 2014 IEEE Intelligent Vehicles Symposium Proceedings, Dearborn, MI, USA, 2014, pp. 414-419, doi: 10.1109/IVS.2014.6856460 relates to localization using automotive laser scanners and local pattern matching. Schlichting et al discloses that to improve accuracy and reliability, 3D features can be used, such as pole-like objects and planes, measured by a laser scanner. These features have to be matched to the reference data, given by a landmark map.

There is, however, a need for a more efficient sparse map representation.

The object of the present disclosure is to provide a more efficient sparse map representation, which for example can be used for autonomous vehicles such as ADAS (Advanced Driving Support System), Active Safety and other features.

This object is obtained by means of a method for representing an environment, performed by a vehicle control system that comprises a main control unit, an environment detection sensor arrangement and a driver assist unit. The method comprises generating a representation of an environment by first obtaining 3-dimensional environment data in a coordinate system by acquiring environment data from the environment detection sensor arrangement, identifying cylindrical structures and planar structures that mainly extend along a vertical extension in a coordinate system and conferring each identified cylindrical structure a first identification and a corresponding coordinate in a 2-dimensional projection of the coordinate system, and conferring each identified planar structure a second identification and a corresponding coordinate in the 2-dimensional projection of the coordinate system. The method further comprises comparing a first representation with a second representation, where the first representation is based on environment data acquired from the environment detection sensor arrangement, and where the second representation is based on predefined reference data, wherein the comparison is used for establishing a position of a vehicle that is using the environment detection sensor arrangement.

The method further comprises identifying an environment type based on the representation, and determining probabilities for one or more events in dependence of the identified environment type, using the representation as a prior in risk assessment when assessing safe operation and threats from occluded objects that can potentially appear, and adapting the driver assist unit, through the vehicle control system, and in dependence of the determined position and/or the determined environment type, to control an ego vehicle.

In this way, an efficient sparse map representation is obtained, requiring relatively small amounts of data. Conferring the structures coordinates effectively reduces the spatial dimensions from 3 to 2 which in turn reduces data size and computational complexity.

Furthermore, the 3-dimensional environment data can be obtained using existing equipment.

Also, positioning can be accomplished in a fast and reliable manner, and it can be determined what kind of risks to be aware of.

According to some aspects, the predefined reference data comprises map data.

According to some aspects, the representation is refined by merging measurement results over time.

According to some aspects, the method is used for controlling an ego vehicle.

The present disclosure also related to a vehicle control system that is associated with the above advantages.

### BRIEF DESCRIPTION OF THE DRAWINGS

The present disclosure will now be described more in detail with reference to the appended drawings, where:
- Figure 1: shows a schematic side view of an ego vehicle on a road;
- Figure 2: shows a schematic top view of an ego vehicle on a road;
- Figure 3: shows a simplified schematic of a vehicle control system;
- Figure 4: schematically illustrates a main control unit; and
- Figure 5: shows a flowchart for methods according to the present disclosure.

### DETAILED DESCRIPTION

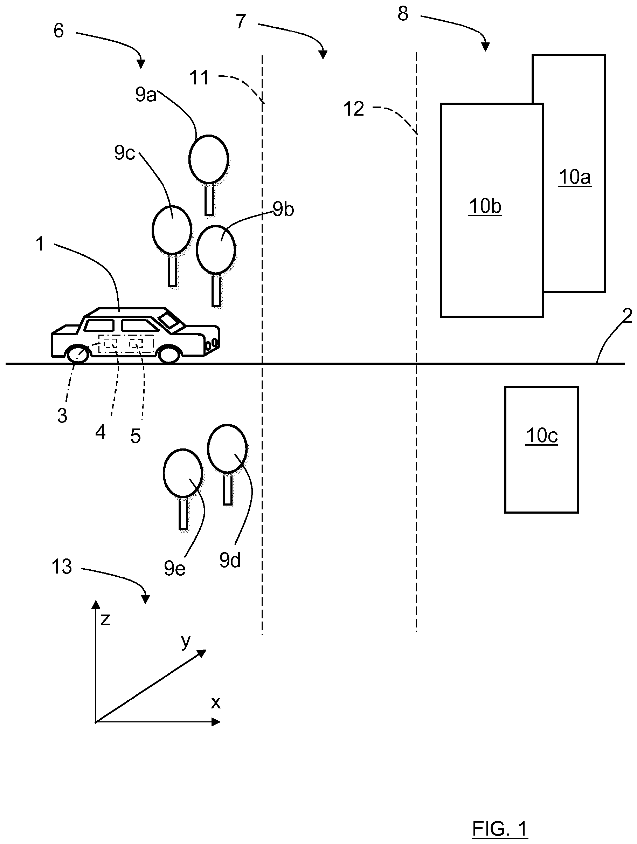

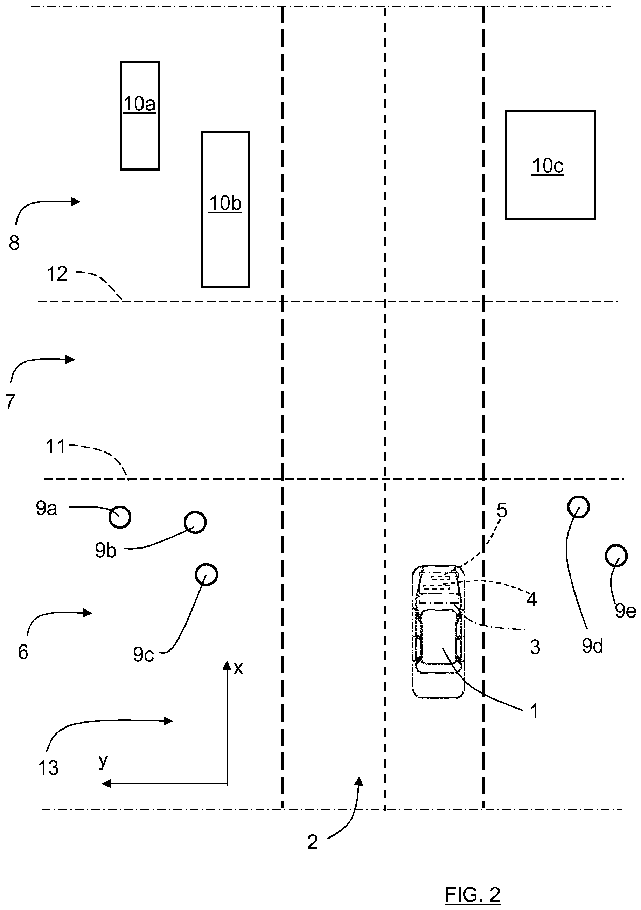

Figure 1 schematically shows a side view of an ego vehicle 1 travelling along a road 2. Figure 2 shows a corresponding top view.

The ego vehicle 1 comprises a vehicle control system 3 which in turn comprises a main control unit 4, and an environment detection sensor arrangement 5. The environment detection arrangement 5 is adapted to detect environment parameters along the road 2 and can for example comprise one of a radar device, a Lidar (Light detection and ranging) device, a camera device, an ultrasonic device, and a combination of any number of these.

There is a first area 6, a second area 7 and a third area 8, where the first area 6 is a forest area with a plurality of trees 9a, 9b, 9c, 9d, 9e, the second area 7 is an open area such as a large field area, and the third area is a rural area with a plurality of buildings 10a, 10b, 10c. The trees 9a, 9b, 9c, 9d, 9e and the buildings 10a, 10b, 10c constitute examples of landmarks.

It is to be noted that the environment shown in Figure 1 and Figure 2 is simplified in order to convey an understanding of a concept of the present disclosure. In reality, of course, normally the areas are larger, there are more trees and building in the corresponding areas, and the open area may of course comprise some trees and buildings. For clarity reasons, the areas 6, 7, 8 are separated by dashed lines 11, 12.

According to some aspects, in this example, the main control unit 4 is adapted to determine a position of the ego vehicle 1 by comparing a stored map representation of the environment with a processed representation of the environment, where an initial detected representation of the environment is acquired in a 3-dimensional coordinate system 13 by means of the environment detection arrangement 5.

According to the present disclosure, the processed representation is obtained by starting from the initial detected representation and identifying cylindrical structures and planar structures that mainly extend along a vertical extension z in the coordinate system 13. In this example, the trees 9a, 9b, 9c, 9d, 9e in the first area 6 are identified as cylindrical structures that mainly extend along the vertical extension z, and the buildings 10a, 10b, 10c are identified as planar structures that mainly extend along the vertical extension z.

Each identified cylindrical structure is conferred a first identification that corresponds to a cylindrical structure, and a corresponding coordinate in a 2-dimensional projection in a horizontal plane x-y of the coordinate system 13. Correspondingly, each identified planar structure is conferred a second identification that corresponds to a planar structure, and a corresponding coordinate in the 2-dimensional projection in the horizontal plane x-y of the coordinate system 13.

This means that each cylindrical structure, here each tree, is reduced to an identification and a coordinate, and each planar structure, here each building, is reduced to an identification and a coordinate, such that the processed representation is obtained. The coordinate can be positioned at any suitable position at the corresponding structure, for example in an estimated center position.

The stored map representation, which generally is comprised in predefined reference data, has been produced in the same manner, such that it comprises a corresponding identification for cylindrical structures and planar structures, and corresponding coordinates for the structures. This enables the comparison between the stored map representation and the processed representation to be processed in an efficient manner, the representations requiring very small amounts of memory capacity.

In this manner, it can quickly and with relatively small computational effort be determined where the vehicle 1 is positioned at a certain moment. When the representation according to the present disclosure is used for positioning, the individual landmark features are not of interest, therefore the landmarks can be 'anonymous', i.e., landmarks may not be associated with any particular type of identification data.

Alternatively, in the case of no stored map representation being available, it can be determined in which kind or type of area in which the ego vehicle 1 is travelling, for example forest type area, open type area or rural type area. Based on this information, certain decisions can be made as will be discussed later.

This approach is advantageous since vertical landmarks have a relatively high likelihood to be observed multiple times as they are less affected by weather conditions than horizontal landmarks. Vertical landmarks are here identified as one of two types, vertical cylinders and vertical planes. Landmarks not matching these requirements are discarded.

The spatial features of vertical landmarks are projected onto a horizontal plane x-y, effectively reducing the spatial dimensions from 3 to 2 to reduce data size and computational complexity coming from the 3rd dimension.

According to some aspects, the above procedure can be reduced to three steps:
- Collect sensor data, for example from a point cloud.
- Project sensor data, such as the point cloud, to the horizontal plane x-y.
- Find lines and circles.

In an optional fourth step, sequentially observed lines and circles can be merged to better estimate the position. The representation is then according to some aspects refined by merging measurement results over time.

The resulting data structure is according to some aspects a geometric representation of either circles or lines.

The present disclosure is not limited to mapping of landmarks in localization applications as indicated above, where an example of determining a type of area in which the ego vehicle 1 is travelling.

According to some aspects, the type of environment is determined, or classified. For example, if cylindrical structures dominate, then it is classified as a forest type area, if planar structures dominate it is classified as a rural or urban type area, and if there are very few landmarks present it is classified as an open field type are, or the like.

Determining the type of environment surrounding the ego vehicle 1 is desired in order to estimate what kind of risks that are likely to occur, for example for automated safety systems and driver assist systems. For example, pedestrians are more likely to approach the ego vehicle 1 in urban areas than in forested areas. Furthermore, wild animals can suddenly approach the ego vehicle 1 in a forest type environment.

Generally, probabilities for one or more events can then be determined in dependence of the identified environment type.

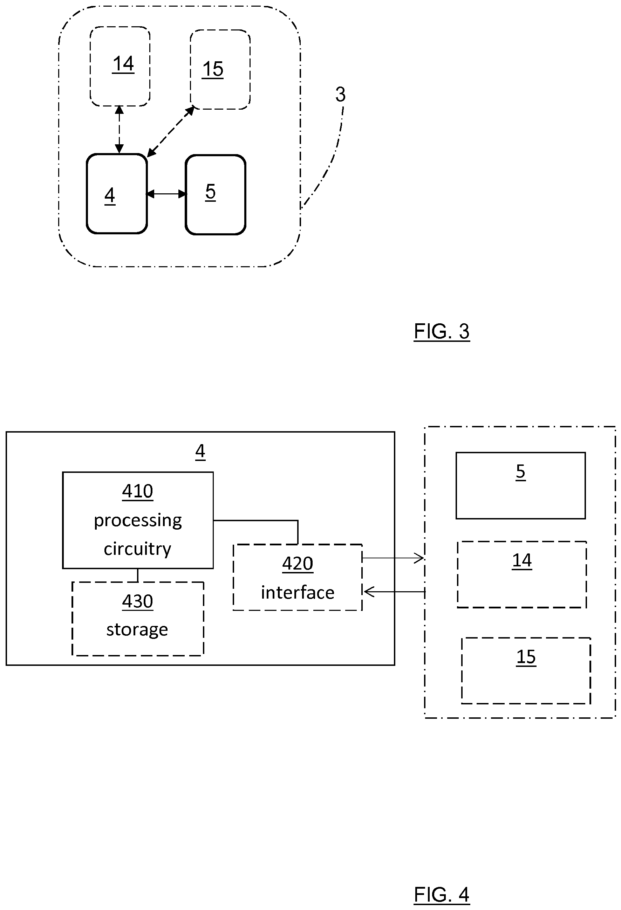

Furthermore, with reference to Figure 3, apart from the previously described main control unit 4 and the environment detection arrangement 5, the vehicle control system 3 comprises a driver assist unit 14 that is adapted to control the ego vehicle 1 in dependence of the determined position and/or the determined environment type. According to some aspects, the vehicle control system 3 also comprises a map unit 15 that comprises is adapted to store and/or download map representations, for example via GNSS (Global Navigation Satellite System).

Figure 4 schematically illustrates a main control unit 4 according to aspects of the present disclosure. It is appreciated that the above described methods and techniques may be realized in hardware. This hardware is then arranged to perform the methods, whereby the same advantages and effects are obtained as have been discussed above.

Processing circuitry 410 is provided using any combination of one or more of a suitable central processing unit (CPU), multiprocessor, microcontroller, digital signal processor (DSP), etc., capable of executing software instructions stored in a computer program product, e.g. in the form of a storage medium 430. The processing circuitry 410 may further be provided as at least one application specific integrated circuit (ASIC), or field programmable gate array (FPGA).

Particularly, the processing circuitry 410 is configured to cause the main control unit 4 to perform a set of operations, or steps. For example, the storage medium 430 may store the set of operations, and the processing circuitry 410 may be configured to retrieve the set of operations from the storage medium 430 to cause the classification unit to perform the set of operations. The set of operations may be provided as a set of executable instructions. Thus, the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The main control unit 4 may further comprise a communications interface 420 for communications with at least one external device such as the detection arrangement 5, the driver assist unit 14 and the map unit 15. As such, the communication interface 420 may comprise one or more transmitters and receivers, comprising analogue and digital components and a suitable number ports for wireline or wireless communication.

The processing circuitry 410 controls the general operation of the unit, e.g. by sending data and control signals to the communication interface 420 and the storage medium 430, by receiving data and reports from the communication interface 420, and by retrieving data and instructions from the storage medium 430. Other components, as well as the related functionality, of the unit are omitted in order not to obscure the concepts presented herein.

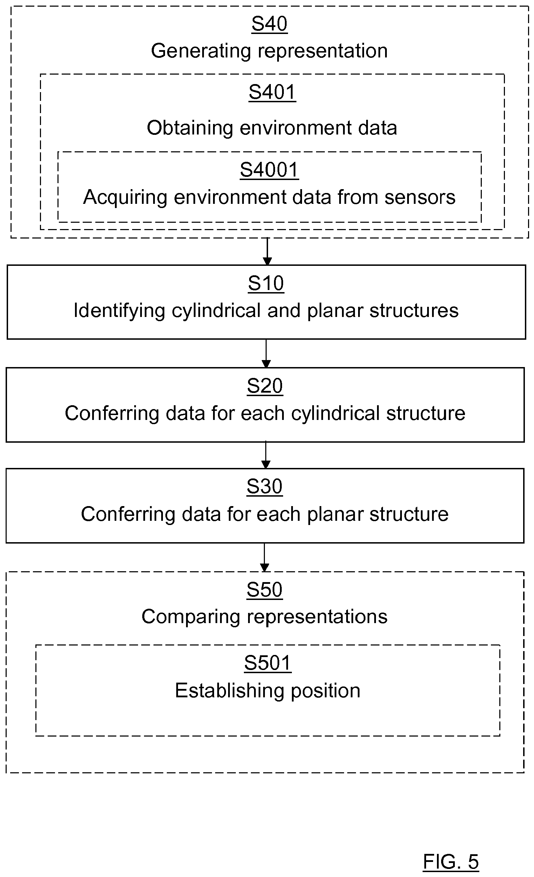

With reference to Figure 5, the present disclosure generally relates to a method for representing an environment. The method comprises identifying S10 cylindrical structures and planar structures that mainly extend along a vertical extension in a coordinate system 13, and conferring S20 each identified cylindrical structure a first identification and a corresponding coordinate in a 2-dimensional projection x-y of the coordinate system 13. The method further comprises conferring S30 each identified planar structure a second identification and a corresponding coordinate in the 2-dimensional projection x-y of the coordinate system 13.

The method comprises generating S40 a representation of an environment by first obtaining S401 3-dimensional environment data in a coordinate system.

Obtaining S401 3-dimensional environment data comprises acquiring S4001 environment data from an environment detection sensor arrangement 5.

The method furhter comprises comparing S50 a first representation with a second representation, where the first representation is based on environment data acquired from the environment detection sensor arrangement 5. The second representation is based on predefined reference data.

The comparison S50 is used for establishing S501 a position of a vehicle that is using the environment detection sensor arrangement 5.

According to some aspects, the predefined reference data comprises map data.

The method comprises identifying an environment type based on the representation and determining probabilities for one or more events in dependence of the identified environment type.

According to some aspects, the representation is refined by merging measurement results over time.

According to some aspects, the method is used for controlling an ego vehicle 1.

The present disclosure thus generally relates to a representation of the environment, using cylindrical structures and planar structures that mainly extend along a vertical extension in a coordinate system. By conferring each identified cylindrical structure a first identification and a corresponding coordinate and conferring each identified planar structure a second identification and a corresponding coordinate, a very efficient representation of the environment is obtained in terms of storage requirements.

This representation can be used in many ways, and a few examples have been presented, where one example relates to determining a position and one other example relates to determining a present environment type. There can be many other uses for an efficient representation according to the present disclosure. Line of sight is important to know for free space detection but also where different objects could be expected to appear. This representation can for example be used as a prior in risk assessment when assessing safe operation and threats from occluded objects that can potentially appear.

The present disclosure is not limited to the examples above, but may vary freely within the scope of the appended claims. For example, there is at least one environment detection sensor, where the environment detection sensors 3a, 3b can be based on any suitable technology such as camera, radar, Lidar, V2X communication, ultrasonic etc.

The 2-dimensional projection x-y of the coordinate system 13 can be in any plane; according to some aspects and as described in the examples above in a horizontal plane.

According to some aspects, the stored map representation is updated by means of the processed representation of the environment. For example if a fence has been erected, and a tree has been removed, the corresponding information in the processed representation of the environment is used for updating the stored map representation.

Generally, the present disclosure also relates to a vehicle control system 3 adapted for an ego vehicle 1 travelling on a road 2. The vehicle control system 3 comprises a main control unit 4 and an environment detection sensor arrangement 5 that is adapted to provide an initial detected representation of the environment. The main control unit 4 is arranged to provide a processed representation of the environment by being adapted to
- identify cylindrical structures and planar structures that mainly extend along a vertical extension z in a 3-dimensional coordinate system 13 from the detected representation of the environment, to
- confer a first identification that corresponds to a cylindrical structure, and a corresponding coordinate in a 2-dimensional projection x-y of the coordinate system 13, for each identified cylindrical structure, and to
- confer a second identification that corresponds to a planar structure, and a corresponding coordinate in the 2-dimensional projection x-y of the coordinate system 13 for each identified planar structure.

The main control unit 4 is arranged to compare a first representation with a second representation, where the first representation is based on the processed representation of the environment, and where the second representation is based on predefined reference data.

The main control unit 4 is arranged to establish a position of the ego vehicle 1 based on the comparison.

The main control unit 4 is arranged to identify an environment type based on the processed representation of the environment, and to determine probabilities for one or more events in dependence of the identified environment type.

The vehicle control system 3 comprises a driver assist unit 14 that is adapted to control the ego vehicle 1.

## Claims

1. A method performed by a vehicle control system, for representing an environment, wherein the vehicle control system comprises a main control unit (4), an environment detection sensor arrangement (5) and a driver assist unit (14), and wherein the method comprises generating (S40) a representation of an environment by:
first obtaining (S401) 3-dimensional environment data in a coordinate system, wherein the obtaining (S401) of 3-dimensional environment data comprises acquiring (S4001) environment data from the environment detection sensor arrangement (5);
identifying (S10) cylindrical structures and planar structures that mainly extend along a vertical extension in a coordinate system (13);
conferring (S20) each identified cylindrical structure a first identification and a corresponding coordinate in a 2-dimensional projection (x-y) of the coordinate system (13); and
conferring (S30) each identified planar structure a second identification and a corresponding coordinate in the 2-dimensional projection (x-y) of the coordinate system (13);
the method further comprising
comparing (S50) a first representation with a second representation, where the first representation is based on environment data acquired from the environment detection sensor arrangement (5), and where the second representation is based on predefined reference data, wherein the comparison (S50) is used for establishing (S501) a position of a vehicle that is using the environment detection sensor arrangement (5); and **characterized in that** the method further comprises:
identifying an environment type based on the representation, and determining probabilities for one or more events in dependence of the identified environment type;
using the representation as a prior in risk assessment when assessing safe operation and threats from occluded objects that can potentially appear; and
adapting the driver assist unit (14), through the vehicle control system, and in dependence of the determined position and/or the determined environment type, to control an ego vehicle.

2. The method according to claim 1, wherein the predefined reference data comprises map data.

3. The method according to any one of the claims 1 j or 2,
wherein the representation is refined by merging measurement results over time.

4. A vehicle control system (3) adapted for an ego vehicle (1) travelling on a road (2), the vehicle control system (3) comprising a driver assist unit (14) that is adapted to control the ego vehicle (1), a main control unit (4) and an environment detection sensor arrangement (5) that is adapted to provide an initial detected representation of the environment, where the main control unit (4) is arranged to provide a processed representation of the environment by being adapted to
- obtain 3-dimensional environment data in a coordinate system by being adapted to acquire environment data from the environment detection sensor arrangement (5),
- identify cylindrical structures and planar structures that mainly extend along a vertical extension (z) in a 3-dimensional coordinate system (13) from the detected representation of the environment, to
- confer a first identification that corresponds to a cylindrical structure, and a corresponding coordinate in a 2-dimensional projection (x-y) of the coordinate system (13) for each identified cylindrical structure, and to
- confer a second identification that corresponds to a planar structure, and a corresponding coordinate in the 2-dimensional projection x-y of the coordinate system 13 for each identified planar structure,
- compare a first representation with a second representation, where the first representation is based on environment data acquired from the environment detection sensor arrangement (5), and where the second representation is based on predefined reference data,
- establish a position of the ego vehicle (1) based on the comparison,
and **characterized in that** the main control unit (4) is further arranged to:
- identify an environment type based on the processed representation of the environment, and to determine probabilities for one or more events in dependence of the identified environment type,
- use the representation as a prior in risk assessment when assessing safe operation and threats from occluded objects that can potentially appear, and
- adapt the driver assist unit (14), through the vehicle control system, and in dependence of the determined position and/or the determined environment type, to control an ego vehicle.

## Patentansprüche

1. Verfahren, das von einem Fahrzeugsteuersystem durchgeführt wird, zum Darstellen einer Umgebung, wobei das Fahrzeugsteuersystem eine Hauptsteuereinheit (4), eine Umgebungserkennungssensoranordnung (5) und eine Fahrerassistenzeinheit (14) umfasst, und wobei das Verfahren das Erzeugen (S40) einer Darstellung einer Umgebung umfasst durch:
erstes Erhalten (S401) von dreidimensionalen Umgebungsdaten in einem Koordinatensystem, wobei das Erhalten (S401) der dreidimensionalen Umgebungsdaten das Erfassen (S4001) von Umgebungsdaten von der Umgebungserkennungssensoranordnung (5) umfasst;
Identifizieren (S10) zylindrischer Strukturen und planarer Strukturen, die sich im Wesentlichen entlang einer vertikalen Erstreckung in einem Koordinatensystem (13) erstrecken;
Übertragen (S20) einer ersten Kennung und einer entsprechenden Koordinate in einer zweidimensionalen Projektion (x-y) des Koordinatensystems (13) an jede identifizierte zylindrische Struktur; und
Übertragen (S30) einer zweiten Kennung und einer entsprechenden Koordinate in der zweidimensionalen Projektion (x-y) des Koordinatensystems (13) an jede identifizierte planare Struktur;
wobei das Verfahren ferner umfasst
Vergleichen (S50) einer ersten Darstellung mit einer zweiten Darstellung, wobei die erste Darstellung auf Umgebungsdaten basiert, die von der Umgebungserkennungssensoranordnung (5) erfasst werden, und wobei die zweite Darstellung auf vordefinierten Referenzdaten basiert, wobei der Vergleich (S50) zum Festlegen (S501) einer Position eines Fahrzeugs verwendet wird, das die Umgebungserkennungssensoranordnung (5) verwendet; und **dadurch gekennzeichnet, dass** das Verfahren ferner umfasst:
Identifizieren eines Umgebungstyps basierend auf der Darstellung und Bestimmen von Wahrscheinlichkeiten für ein oder mehrere Ereignisse in Abhängigkeit von dem identifizierten Umgebungstyp;
Verwenden der Darstellung als Vorabdaten bei der Risikobeurteilung, wenn der sichere Betrieb und Bedrohungen durch verdeckte Objekte, die möglicherweise auftreten können, beurteilt werden; und
Anpassen der Fahrerassistenzeinheit (14) durch das Fahrzeugsteuersystem und in Abhängigkeit von der bestimmten Position und/oder dem bestimmten Umgebungstyp, um ein Ego-Fahrzeug zu steuern.

2. Verfahren nach Anspruch 1, wobei die vordefinierten Referenzdaten Kartendaten umfassen.

3. Verfahren nach einem der Ansprüche 1 oder 2,
wobei die Darstellung durch Zusammenführen von Messergebnissen über die Zeit verfeinert wird.

4. Fahrzeugsteuersystem (3), das für ein Ego-Fahrzeug (1) angepasst ist, das auf einer Straße (2) fährt, wobei das Fahrzeugsteuersystem (3) eine Fahrerassistenzeinheit (14), die angepasst ist, das Ego-Fahrzeug (1) zu steuern, eine Hauptsteuereinheit (4) und eine Umgebungserkennungssensoranordnung (5) umfasst, die angepasst ist, eine anfängliche erkannte Darstellung der Umgebung bereitzustellen, wobei die Hauptsteuereinheit (4) eingerichtet ist, eine verarbeitete Darstellung der Umgebung bereitzustellen, indem sie angepasst ist zum
- Erhalten von dreidimensionalen Umgebungsdaten in einem Koordinatensystem, indem sie angepasst ist, Umgebungsdaten von der Umgebungserkennungssensoranordnung (5) zu erfassen,
- Identifizieren von zylindrischen Strukturen und planaren Strukturen, die sich im Wesentlichen entlang einer vertikalen Erstreckung (z) in einem dreidimensionalen Koordinatensystem (13) von der erfassten Darstellung der Umgebung erstrecken,
- Übertragen einer ersten Kennung, die einer zylindrischen Struktur entspricht, und einer entsprechenden Koordinate in einer zweidimensionalen Projektion (x-y) des Koordinatensystems (13) an jede identifizierte zylindrische Struktur, und
- Übertragen einer zweiten Kennung, die einer planaren Struktur entspricht, und einer entsprechenden Koordinate in der zweidimensionalen Projektion x-y des Koordinatensystems 13 an jede identifizierte planare Struktur,
- Vergleichen einer ersten Darstellung mit einer zweiten Darstellung, wobei die erste Darstellung auf Umgebungsdaten basiert, die von der Umgebungserkennungssensoranordnung (5) erfasst werden, und wobei die zweite Darstellung auf vordefinierten Referenzdaten basiert,
- Festlegen einer Position des Ego-Fahrzeugs (1) basierend auf dem Vergleich,
und **dadurch gekennzeichnet, dass** die Hauptsteuereinheit (4) ferner eingerichtet ist zum:
- Identifizieren eines Umgebungstyps basierend auf der verarbeiteten Darstellung der Umgebung und Bestimmen von Wahrscheinlichkeiten für ein oder mehrere Ereignisse in Abhängigkeit von dem identifizierten Umgebungstyp,
- Verwenden der Darstellung als Vorabdaten bei der Risikobeurteilung, wenn der sichere Betrieb und Bedrohungen durch verdeckte Objekte, die möglicherweise auftreten können, beurteilt werden, und
- Anpassen der Fahrerassistenzeinheit (14) durch das Fahrzeugsteuersystem und in Abhängigkeit von der bestimmten Position und/oder dem bestimmten Umgebungstyp, um ein Ego-Fahrzeug zu steuern.

## Revendications

1. Procédé mis en œuvre par un système de commande de véhicule, pour représenter un environnement, dans lequel le système de commande de véhicule comprend une unité de commande principale (4), un agencement de capteur de détection d'environnement (5) et une unité d'assistance au conducteur (14), et dans lequel le procédé comprend la génération (S40) d'une représentation d'un environnement :
en obtenant d'abord (S401) des données d'environnement tridimensionnelles dans un système de coordonnées, dans lequel l'obtention (S401) de données d'environnement tridimensionnelles comprend l'acquisition (S4001) de données d'environnement à partir de l'agencement de capteur de détection d'environnement (5) ;
en identifiant (S10) des structures cylindriques et des structures planes qui s'étendent principalement le long d'une étendue verticale dans un système de coordonnées (13) ;
en attribuant (S20) à chaque structure cylindrique identifiée une première identification et une coordonnée correspondante dans une projection bidimensionnelle (x-y) du système de coordonnées (13) ; et
en attribuant (S30) à chaque structure plane identifiée une seconde identification et une coordonnée correspondante dans la projection bidimensionnelle (x-y) du système de coordonnées (13) ;
le procédé comprenant en outre
la comparaison (S50) d'une première représentation à une seconde représentation, où la première représentation est basée sur des données d'environnement acquises à partir de l'agencement de capteur de détection d'environnement (5), et où la seconde représentation est basée sur des données de référence prédéfinies, dans lequel la comparaison (S50) est utilisée pour établir (S501) une position d'un véhicule qui utilise l'agencement de capteur de détection d'environnement (5) ; et **caractérisé en ce que** le procédé comprend en outre :
l'identification d'un type d'environnement en fonction de la représentation, et la détermination de probabilités pour un ou plusieurs événements en fonction du type d'environnement identifié ;
l'utilisation de la représentation comme données antérieures dans l'évaluation du risque lors de l'évaluation du fonctionnement sans danger et des menaces provenant d'objets occultés qui peuvent potentiellement apparaître ; et
l'adaptation de l'unité d'assistance au conducteur (14), à travers le système de commande de véhicule, et en fonction de la position déterminée et/ou du type d'environnement déterminé, pour commander un véhicule ego.

2. Procédé selon la revendication 1, dans lequel les données de référence prédéfinies comprennent des données cartographiques.

3. Procédé selon l'une quelconque des revendications 1 ou 2,
dans lequel la représentation est affinée en fusionnant des résultats de mesure au fil du temps.

4. Système de commande de véhicule (3) conçu pour un véhicule ego (1) se déplaçant sur une route (2), le système de commande de véhicule (3) comprenant une unité d'assistance au conducteur (14) qui est conçue pour commander le véhicule ego (1), une unité de commande principale (4) et un agencement de capteur de détection d'environnement (5) qui est conçu pour fournir une représentation détectée initiale de l'environnement, où l'unité de commande principale (4) est configurée pour fournir une représentation traitée de l'environnement en étant conçue pour
- obtenir des données d'environnement tridimensionnelles dans un système de coordonnées en étant conçue pour acquérir des données d'environnement à partir de l'agencement de capteur de détection d'environnement (5),
- identifier des structures cylindriques et des structures planes qui s'étendent principalement le long d'une étendue verticale (z) dans un système de coordonnées tridimensionnel (13) à partir de la représentation détectée de l'environnement, pour
- attribuer une première identification qui correspond à une structure cylindrique, et une coordonnée correspondante dans une projection bidimensionnelle (x-y) du système de coordonnées (13) pour chaque structure cylindrique identifiée, et pour
- attribuer une seconde identification qui correspond à une structure plane, et une coordonnée correspondante dans la projection bidimensionnelle (x-y) du système de coordonnées (13) pour chaque structure plane identifiée,
- comparer une première représentation à une seconde représentation, où la première représentation est basée sur des données d'environnement acquises à partir de l'agencement de capteur de détection d'environnement (5), et où la seconde représentation est basée sur des données de référence prédéfinies,
- établir une position du véhicule ego (1) en fonction de la comparaison,
et **caractérisé en ce que** l'unité de commande principale (4) est en outre configurée pour :
- identifier un type d'environnement en fonction de la représentation traitée de l'environnement, et pour déterminer des probabilités pour un ou plusieurs événements en fonction du type d'environnement identifié,
- utiliser la représentation comme données antérieures dans l'évaluation du risque lors de l'évaluation du fonctionnement sans danger et des menaces provenant d'objets occultés qui peuvent potentiellement apparaître, et
- adapter l'unité d'assistance au conducteur (14), à travers le système de commande de véhicule, et en fonction de la position déterminée et/ou du type d'environnement déterminé, pour commander un véhicule ego.
